(19) Europäisches Patentamt
European Patent Office
Office européen des brevets

(11) **EP 2 314 893 A1**

(12) **EUROPEAN PATENT APPLICATION**

(43) Date of publication:
**27.04.2011 Bulletin 2011/17**

(51) Int Cl.:
*F16D 1/09* (2006.01)  *F16D 7/02* (2006.01)
*F16D 43/21* (2006.01)

(21) Application number: **09173690.0**

(22) Date of filing: **21.10.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(71) Applicant: **ZERO-MAX HOLDING DK A/S**
**8600 Silkeborg (DK)**

(72) Inventor: **The designation of the inventor has not
yet been filed**

(74) Representative: **Tellefsen, Jens J. et al**
**Patrade A/S**
**Fredens Torv 3A**
**8000 Aarhus C (DK)**

Remarks:
A request for correction of the drawings (reference
numerals) has been filed pursuant to Rule 139 EPC.
A decision on the request will be taken during the
proceedings before the Examining Division
(Guidelines for Examination in the EPO, A-V, 3.).

(54) **Torque limiting assembly**

(57)     A torque limiting assembly (10) comprising a torque input part (12) for coaxially connection to a rotational motion torque supplying shaft (14) and a torque output part (35) for connection to a rotational motion torque receiving appliance and for coaxially mounting in relation to the torque input part (12). The torque input part (12) includes four components: A hub component (20) defining a through-going cylindrical bore (16) defining a tight fit clearance with the torque supplying shaft (14), a conical locking ring (26) defining an inner conical surface (34) for cooperating with the outer conical surface (32) of the hub component (20) when the conical locking ring (26) is mounted on the hub component (20), a second annular disc (48) defining a second central aperture (54) having a diameter slightly larger than the diameter of the torque supplying shaft (14) and having opposite second (50) and third (52) radial surfaces, and a combined annular spring washer and fixation ring (64).

FIG 1

## Description

The present invention relates to a torque limiting assembly for limiting the amount of torque being transferred from a torque supplying shaft to a torque receiving appliance, and further to a method of adjusting and limiting the amount of torque being transferred from a torque supplying shaft to a torque receiving appliance by providing a torque limiting assembly.

Torque limiting assemblies are well known in the art of rotating mechanical power transmission systems as essential safety devices for preventing damages to mechanical equipment. A torque limiting assembly is used to provide an accurate torque overload protection for many different kinds of rotating mechanical power transmission systems. In particular, the torque limiting assembly is employed as a coupling between a torque supplying shaft and a torque receiving appliance. The torque supplying shaft receives input torque from a torque generating device, such as an engine or a turbine, which in turn is powered by e.g. wind, water, steam, gas or the like. The torque receiving appliance may be e.g. an electrical generator, a tool such as a drill or any other industrial machinery requiring an input of torque for operating.

During regular non-overload operation of the mechanical power transmission system, the torque limiting assembly transfers substantially the full amount of torque generated by the torque supplying shaft to the torque receiving appliance, except for the minimal friction losses occurring in every mechanical power transmission systems. In case of a non-regular operation, where the torque generated by the torque supplying shaft exceeds a specific torque value, the torque limiting assembly limits the torque to the specific torque value or a lesser value. The specific torque value should correspond to the rating of the mechanical power transmission system in order to avoid damages in the mechanical power transmission systems due to torque overload. Damages due to torque overload may otherwise occur in the torque receiving appliance, in shafts and/or gears of the mechanical power transmission system and/or in the torque generating device. Such damages often result in a permanent breakdown of the system and may require be very extensive and expensive repairs,

A non-regular operation, i.e. a torque overload operation, may be caused by a jam in the shaft or gear of the mechanical power transmission system. Alternatively, the torque overload operation may be caused by a jam or a failure of torque receiving appliance, e.g., a short circuit of a generator or in an electrical power supply network. In such cases the intrinsic rotational energy of the torque generating device may cause an excessive rotational momentum to occur on the torque supply shaft- Yet alternatively, the overload operation may be caused by a failure or jam in the torque generating device, either due to an unexpectedly high input power caused by e.g. a storm in case of a wind turbine as the torque generating device, or a or a flood in case of a water turbine as the torque generating device. Occasionally, an overload operation may occur due to a jam in the torque generating device. In such cases the intrinsic rotational energy of the torque receiving appliance may cause an excessive rotational momentum to occur on the torque supply shaft, thereby causing the torque receiving device to supply torque to the torque generating device.

In all of the above torque overload operations, the torque limiting assembly is employed to limit the torque transferred by the mechanical power transmission systems. Such torque limiter assemblies typically utilize two parts, such as plates, which are in friction contact and which during regular operation rotate synchronously but which will slip or slide in relation to each other in case of a torque overload. Such torque limiter assemblies have been manufactured by the applicant company and are described in e.g. the international patent application WO 2008/049428 of the applicant company. Similar devices are described in the German utility model DE 20 2005 000215 U1, describing a slip clutch employing a spring washer. Further prior art documents include US 3 319 508 describing a resilient retaining ring and US 4 338 798, describing an adjustable torque limiting apparatus with frictionly coupled discs.

It is an object of the present invention to limit the torque in a mechanical system including a shaft between a torque generating device and a torque receiving appliance, without substantially extending the distance between the torque generating device and the torque receiving appliance. Typically, the torque limiting assembly must be employed in locations which are very narrow and which are having a limited amount of space. Such locations may be inside the top housing of a wind power plant. There is thus a need for the torque limiting assembly to be as compact as possible for not necessitating any enlargement of the housing. It is an advantage compared to the prior art that the torque limiting assembly according to the present invention is adjustable and very simple to install and adjust due to the convenient location of the adjustment screws and installation screws. A feature of the present invention is the improved reliability due to the employment of multiple friction surfaces.

The above object, need, advantage and feature together with numerous other objects, needs, advantages and features which will be evident from the below detailed description of preferred embodiments of the adjustable torque limiter are, according to a first aspect of the present invention obtained by a torque limiting assembly comprising:

a torque input part for coaxial connection to a rotational motion torque supplying shaft and
a torque output part for connection to a rotational motion torque receiving appliance and for coaxial mounting in relation to the torque input part, the torque output part being configured as a torque limiting first annular disc having opposite first and second sides including a first and a second specific torque defining friction surface, respectively, the torque limiting first annular disc defining a first central aperture having a diameter substantially larger than the diameter of the torque supplying shaft,

the torque input part including four components being:

a hub component defining a through-going cylindrical bore defining a tight fit clearance with the torque supplying shaft, the hub component further defining a first radial surface including a third specific friction surface for contacting the first specific torque defining friction surface of the torque limiting first annular disc, the hub component further defining a reception surface opposite the first radial surface, the hub component further defining an outer conical surface tapering away from the first radial surface and defining a first maximum diameter juxtaposed the first radial surface and a first minimum diameter opposite the first radial surface, the hub component further having an annular flange located within the first central aperture when the third specific friction surface is contacting the first specific friction surface, the annular flange defining an exposed annular end face, the hub component further including a first plurality of screw threads extending from the reception surface into the hub component and being parallel to the through-going cylindrical bore, and a second plurality of screw threads extending from the annular end face into the annular flange and being parallel to the through going cylindrical bore,

a conical locking ring defining an inner conical surface for cooperating with the outer conical surface of the hub component when the conical locking ring is mounted on the hub component, the inner conical surface defining a second minimum diameter larger than the diameter of the through-going cylindrical bore of the hub component and a second maximum diameter slightly smaller than the first maximum diameter and substantially larger than the first minimum diameter for providing a substantial contact surface between the inner conical surface and the outer conical surface when the conical locking ring is mounted on the hub component, the locking ring further comprising a first multitude of through-going holes being in registration or alignment with the first plurality of screw threads when the conical locking ring is mounted on the hub component,

a second annular disc defining a second central aperture having a diameter slightly larger than the diameter of the torque supplying shaft and having opposite second and third radial surfaces, the second radial surface including a fourth specific torque defining friction surface for contacting the second specific torque defining friction surface, the second annular disc further comprising a second multitude of through-going holes being in registration or alignment with the second plurality of screw threads when the second annular disc is mounted on the hub component, and

a combined annular spring washer and fixation ring defining a third central aperture having a diameter slightly larger than the diameter of the torque supplying shaft and defining an inner fixation ring and an outer spring member, the inner fixation ring comprising a third multitude of through-going holes being in registration or alignment with the second multitude of through-going holes and the second plurality of screw threads when the inner fixation ring is mounted on the hub component, the outer spring member protruding outwardly from the inner fixation ring, the outer spring member being in contact with and applying a clamping force onto the third radial surface of the second annular disc to achieve a first friction force between the first and third specific torque defining friction surfaces and a second friction force between the second and fourth specific torque defining friction surfaces,

the torque limiting assembly further comprising:

a first set of screws mounted in the first multitude of through-going holes and fixated to the first plurality of screw threads, and a second set of screws mounted in the second and third multitudes of through going holes and fixated to the second plurality of screw threads.

The above torque limiting assembly is preferably used in a mechanical system where the torque is being transferred between the torque supplying shaft and the torque receiving appliance. The torque input part is connected to the rotational motion torque supplying shaft being e.g. an engine, a wind turbine, a water turbine or the like. The torque output part is connected to a rotational motion torque receiving appliance typically being an electrical generator; however, other mechanical appliances may be contemplated as well. There between a gear may be used for changing of the rotational speed. During regular operation the torque input part and the torque output part rotate synchronously, however, during non-regular operation when the torque exceeds the specific value corresponding to the torque rating representing the safe operation of the mechanical system, the torque input part and the torque output part rotate non-synchronously and thermal energy resulting from the friction between the torque input part and the torque output part is dispersed into the specific torque defining surfaces. The use of two separate specific torque defining friction surfaces on each side of the first annular disc of the torque output part will allow for increased redundancy in case one side is deteriorated by oil or fat from the mechanical system.

By using two cooperating conical surfaces which are clamped together by axially extending screws, a very large clamping force may be established between the torque supplying shaft and the torque input part. By establishing a through-going cylindrical bore, the torque limiting assembly may be completely accommodated on the torque supplying shaft, thereby not extending the distance between the torque supplying shaft and the torque receiving appliance. When assembled, the annular flange should preferably establish a tight clearance with the first annular disc for acting as a hub around which the first annular disc may rotate in a symmetric and well balanced fashion.

The combined annular spring washer and fixation ring dispenses with the requirement of having a separate fixation ring and spring washer. The spring member should be bent towards the third radial surface and contacting the third radial surface while the fixation ring should not contact the third radial surface for allowing a certain margin for adjustment of the spring force and thereby the friction force, i.e. the torque limit.

According to an alternative embodiment, the inner and outer conical surfaces define a tapering angle in relation to the cylindrical bore of between 0.1 degrees and 30 degrees, preferably between 3 degrees and 10 degrees and more preferably between 5 degrees and 7 degrees.

According to an alternative embodiment, the torque limiting assembly is made of steel. Steel is a suitable material due to its rigidity and durability.

According to an alternative embodiment, the friction coefficient between the first and third specific torque defining friction surfaces and between the second and fourth specific torque defining friction surfaces varies by 0%-100%, preferably by 10%-30%, more preferably by 20%-30%. When the torque limiting assembly is limiting the torque, heat is generated in the torque defining friction surfaces. Different friction coefficients may be desirable for allowing an improved temperature distribution inside the torque limiting assembly, e.g. by allowing the hub component to absorb more heat than the first and second annular discs.

According to an alternative embodiment, the distance between the first maximum diameter and the second maximum diameter comprise 1-20 mm, preferably 2-10 mm and more preferably 4-5 mm, the distance between the first minimum diameter and the second minimum diameter comprises 1-20 mm, preferably 2-10 mm and more preferably 4-5 mm, the distance between the first maximum diameter and the first minimum diameter comprises 10-200 mm, preferably 20-100 mm and more preferably 40-50 mm, and/or, the distance between the second maximum diameter and the second minimum diameter comprises 10-200 mm, preferably 20-100 mm and more preferably 40-50 mm. The above numbers constitute suitable numerical values for allowing an effective clamping of the torque supplying shaft.

According to an alternative embodiment, the torque output part further comprises a number of mounting flanges with mounting holes for connecting to the rotational motion torque receiving appliance, the number being 2-20, preferably 2-10, more preferably 4. The receiving appliance is preferably mounted onto the mounting flanges. In this way the access to the second set of screws will not be obscured.

According to an alternative embodiment, the first set of screws amounts to 4-50 screws, preferably 10-30 screws, more preferably 18 screws, and, the second set of screws amounts to 4-50 screws, preferably 10-30 screws, more preferably 20 screws. The above number of screws is suitable for allowing a secure fastening and proper adjustment.

According to an alternative embodiment, further including a first friction plate located between the first and third specific torque defining friction surface and/or including a second friction plate located between the second and fourth specific torque defining friction surface. Friction plates may be used for achieving a well defined friction coefficient. When the torque limiting assembly must limit the torque, the specific torque defining friction surfaces will be worn, and it is evident that the specific torque defining friction surfaces must be replaced after some time of use. By using separate friction plates, the exchange of the specific torque defining friction surfaces will be simpler and less expensive.

The torque limiting assembly may advantageously be incorporated in a water power plant or a wind power plant.

The above object, need, advantage and feature together with numerous other objects, needs, advantages and features which will be evident from the below detailed description of preferred embodiments of the adjustable torque limiter are, according to a second aspect of the present invention obtained by a method comprising providing a torque limiting assembly according to the first aspect and performing the two main steps of:

performing the sub-steps of: accommodating the torque supplying shaft inside of the through-going cylindrical bore of the hub component, subsequently accommodating the inner conical surface of the conical locking ring juxtaposed the outer conical surface of the hub component and subsequently tightening the first set of screws, and
performing the sub-steps of: accommodating the first specific friction surface of the first annular disc juxtaposed the third specific friction surface of the hub component, subsequently accommodating the fourth specific torque defining friction surface of the second annular disc juxtaposed the second specific torque defining friction surface of the hub component, subsequently accommodating the outer spring member of the combined annular spring washer and fixation ring juxtaposed the third radial surface of the second annular disc and subsequently tightening and adjusting the second set of screws.

Brief description of the drawings

Fig. 1 is a section view of a torque limiting assembly according to the present invention.
Fig. 2 is an exploded view of a torque limiting assembly according to the present invention.
Figs. 3a and 3b are schematic views illustrating the working principle of a adjustable torque limiting assembly according to the present invention.

Detailed description of the drawings

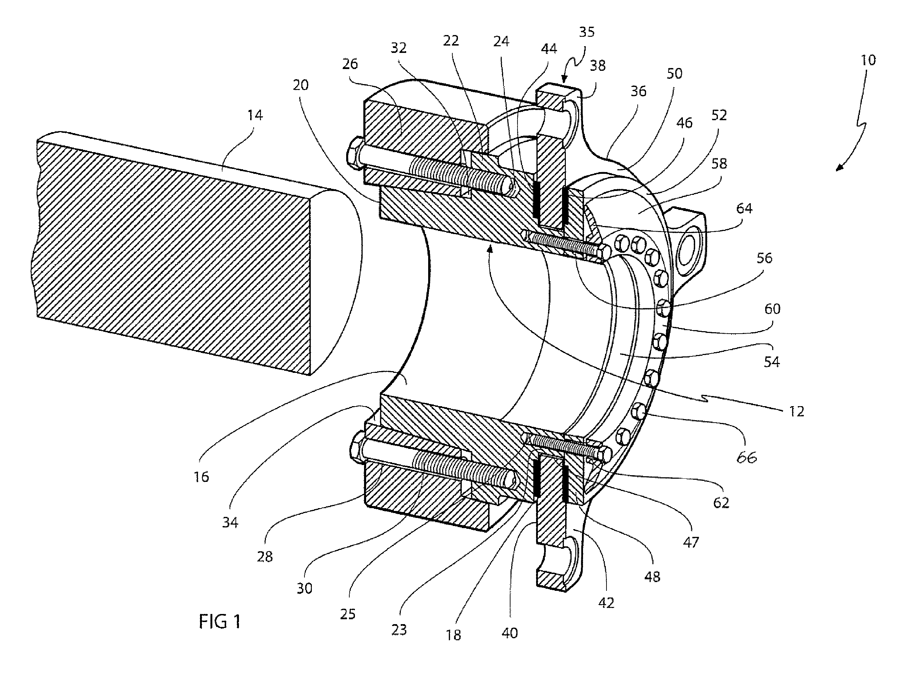

Fig. 1 shows an adjustable torque limiting assembly according to a preferred embodiment of the present invention, in particular suitable for a wind power plant, and which is as a whole being designated the reference numeral 10. The torque limiting assembly 10 may be used for transferring and limiting the torque from a torque generating device such as an engine, a turbine, a wind mill or a water mill to a torque receiving device such as an electrical generator or various kinds of driving arrangements such as a ship's screw or tools such as drills.
The torque limiting assembly 10 comprises an axially symmetrical torque input part 12 designed to accommodate a cylindrical torque supplying shaft 14. The torque input part 12 comprises four main parts, where the first part being a hub component 20. The hub component 20 defines a through-going central bore 16 having a shape corresponding to the outer surface 18 of the torque supplying shaft 14 to allow the torque supplying shaft 14 to enter and be accommodated in the through-going central bore with a thigh fit. The hub component 20 extends in an axial direction and is made of steel, thereby exhibiting some flexibility. The hub 12 further comprises an outwardly extending flange 22 defining a first radial surface 18 and an opposite surface comprising a plurality of axially extending first plurality of screw threads 24 parallel to the through-going central bore 16 and an outer conical surface 32 tapering away from the outwardly extending flange 22. The hub component 20 further comprises an annular flange 23 extending in an axial direction and located between the through-going central bore 16 and the first radial surface 18. The annual flange 23 defines an end surface having a second plurality of screw threads 25 extending axially into the hub component 20 parallel to the through-going central bore 16.
The torque input part 12 further comprises an axially symmetrical locking ring 26 to be positioned outside of the hub component 20. The locking ring 26 comprises a first multitude of through-going holes 28 corresponding in number and position to the axial threads 24 of the hub 12. The locking ring 26 further comprises an inner conical surface 34 having an area and a tapering angle corresponding to the outer conical surface 32 of the hub 12. To assemble the locking ring 26 onto the hub component 20 after the torque supplying shaft 14 has been inserted into the through-going central bore 16, the inner conical surface 34 of the locking ring 26 is slid onto the outer conical surface 32 of the hub component to position the through-going holes 28 in registration and alignment with the first plurality of screw threads 24. Thereafter, torque shaft installation screws 30 are inserted into through-going holes 28 and fastened to the first plurality of screw threads 24 for fastening the locking ring 26 in relation to the hub 12. The inner and outer conical surfaces 34 32 are being slidably cooperating thereby allowing the hub component 20 to be bent inwardly upon tightening of the screws 30 for clamping the torque supplying shaft 14 tightly to the hub component 20.
The torque limiting assembly 10 further comprises a torque output part 35. The torque output part 35 defines a first annular disc 36 which defines a first side 40 and an opposite second side 42. The first side 40 of the first annular disc 36 comprises a first friction disc 44 and the second side 42 of the first annular disc 36 comprises a second friction disc 46. The first annular disc 36 defines a first central aperture 47 having a diameter being substantially larger than the torque supplying shaft 14 and slightly larger than the maximum diameter defined by the annular flange 23. When the first annular disc 36 is being mounted onto the hub component 20, the first friction disc 44 of the first side 40 of the annular disc 36 is abutting the first radial surface 18 of the hub component 20 and the annular flange 23 of the hub component 20 is extending into the first central aperture 47 by a tight clearance. The torque output part 35 is further provided with four outwardly extending flanges 38, which are provided with screw holes 40 for connection to the momentum receiving device (not shown).
The torque input part 12 further comprises a second annular disc 48 defining a second radial surface 50 and an opposite third radial surface 52. The second annular disc 48 further comprises a second central aperture 54 having a diameter being slightly larger than the diameter of the torque supplying shaft 14 and a second plurality of through-going holes 56 corresponding in number and position to the second plurality of screw threads 25 of the annular flange 23. The second radial surface 50 of the second annular disc 48 is being mounted abutting the second friction disc 46 of the second side 42 of the first annular disc and the second plurality of through-going holes 56 are positioned in registration and alignment with the second plurality of screw threads 25 of the annular flange 23.
The torque input part 12 further comprises an annular spring washer 50 constituting a combined spring washer and fixation ring. The spring washer 50 comprises an inner fixation ring 60 comprising a third plurality of through-going holes 62 corresponding in number and position to the second plurality of screw threads 25 of the annular flange 23 The spring washer 50 further comprises an outwardly and axially protruding flexible spring member 64. The spring washer 50 is positioned outside the third radial surface 52 of the second annular disc 48 and the third plurality of through-going holes 62 are positioned in registration and alignment with the second plurality of through-going holes 56. The spring member 64 thereby contacts the third radial surface 52 of the second annular disc 48, while a gap is formed between the fixation ring 60 and the third radial surface 52 of the second annular disc 48. To mount the torque limiting assembly 10 together, a plurality of torque adjustment screws 66 are inserted through the second and third plurality of through-going holes 56 and 62 and are fastened by the second plurality of screw threads 25 of the annular flange 23 of the hub component 20.

The torque which can be transmitted between the torque input part 12 and the torque output part 35 is now limited by the friction force between the first radial surface 18 of the hub component 20 and the first side 40 of the first annular disc 36 or the friction force between the second radial surface 50 of the hub component 48 and the first side 40 of the first annular disc 36. By tightening the torque adjustments screws 66, the spring member 64 will apply an increasing spring force onto the second annular disc 48, thereby establishing an increasing friction force between the first radial surface 18 of the hub component 20 and the first side 40 of the first annular disc 36, and, between the second radial surface 50 of the hub component 48 and the first side 40 of the first annular disc 36, as the friction force is proportional to the spring force. The second annular disc will distribute the spring force evenly over the second radial surface 50. The spring force, and thereby the friction force, may be decreased by loosening the torque adjustment screws 66. The friction force is also depending on the friction coefficient of the materials used, and in particular by the first and second friction discs 44 and 46, respectively. In case the torque to be transferred exceeds the amount, which can be transferred by the friction force between the first radial surface 18 of the hub component 20 and the first side 40 of the first annular disc 36, or, between the second radial surface 50 of the hub component 48 and the first side 40 of the first annular disc 36, the torque output part 35 will slip in relation to the hub component 12. The friction force may be calculated according to the formula below:

$$F_f = const * F_s$$

Where $F_f$ = is the friction force, const is the fric-

tion coefficient and $F_s$ is the spring force.

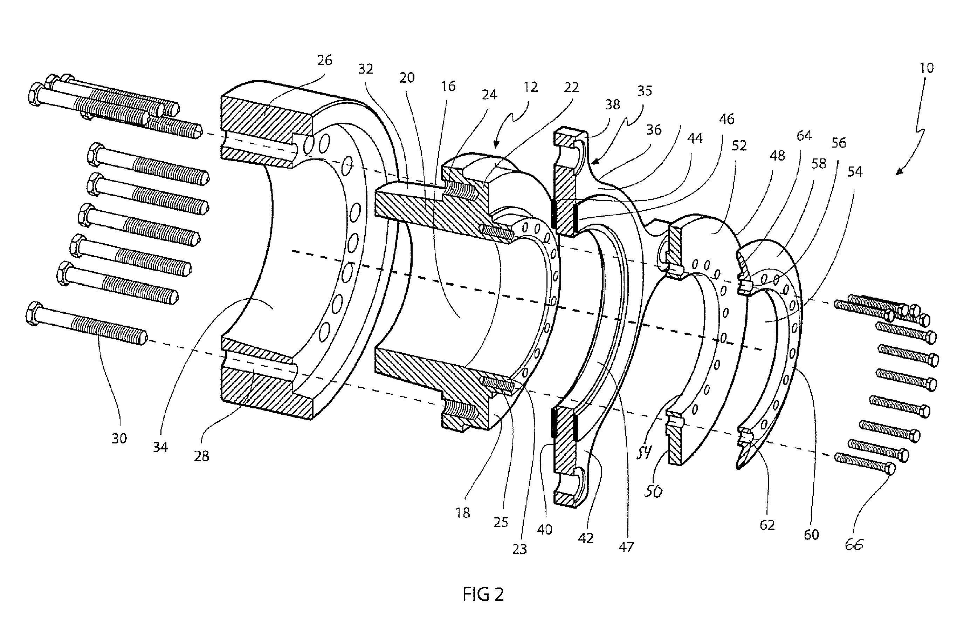

Fig. 2 shows an exploded view of the torque limiting assembly 10 as shown in Fig. 1. The preferred embodiment according to the present invention may be assembled and adjusted on site in a very convenient manner. The torque limiting assembly 10 may for instance be assembled according to the below method. As a first step, the torque supplying shaft (not shown here, designated 14 in fig 1) is inserted into the through-going central bore 16. The inner surface of the central hub 20 should fit by a tight clearance around the drive shaft 18. In a second step, the locking ring 26 is applied and slipped onto the outer conical surface 32 of the hub component 20. The outer conical surface 32 of the hub component 20 forms a tapered surface. The inner conical surface 34 of the locking ring 26 forms a corresponding tapered surface. By inserting the torque shaft installation screws 30 through the first multitude of through-going holes 28 of the locking ring 26 and into the first plurality of screw threads 24 and by tightening the screws 30, the tapered surface of the inner conical surface 34 of the locking ring 26 will subject the hub component 20 to an inwardly directed force due to the tapered shape of the inner conical surface 34 and the corresponding tapered shape of the outer conical surface 32. By bending the hub component 20 slightly inwards, the torque supplying shaft (not shown) will be clamped into a fixated position in relation to the hub 12, and will be held in place by the friction force, which is understood to be larger than the friction force between the torque input part 12 and the torque output part 35. The screws 30 should be tightened sufficiently for preventing any unintentional slip between the torque supplying shaft (not shown) and the hub component 20. It should be noticed that the torque shaft installation screws 30 are inserted in an axial direction making them easily accessible from the outside. The torque shaft installation screws 30 will not be obscured by any other part of the torque supplying shaft 14 or the assembly 10. Thus, any assembly, adjustment or disassembly of the locking ring 26 can be performed easily at any time.

The first annular disc 36 is applied onto the hub component 20 from the opposite side of the locking ring 26 for contacting the first radial surface 18 of the hub component 20. The annular flange 23 of the hub component 20 is surrounded by the first annular disc 36 and acting as a hub in relation to the first annular disc. The diameter of the first central aperture 47 of the first annular disc should be only slightly larger than the maximum diameter of the annular flange 23 of the hub component 20 in order for the first annular disc 36 to be able to rotate relative to the hub component 20. The first and second friction discs 44 and 46 are preferably attached to the first and second surfaces 40, 42, respectively, of the first annular disc 36, for establishing juxtaposing friction surfaces between the first radial surface 18 and the first friction disc 44, and, further juxtaposing friction surfaces between the second radial surface 50 and the second friction disc 46. Alternatively, the friction discs 44 and 46 may also be separate components, thereby establishing four juxtaposed friction surfaces, i.e. between the first radial surface 18 and the first friction disc 44, between the first friction disc 44 and the first side 40, between the second side 42 and the second friction disc 46 and between the second friction disc 46 and the second radial surface. The second annular disc 48 and the spring washer 50 are positioned onto the second friction disc 46, applying the second and third plurality of through-going holes 56 62 in registration and alignment with the second plurality of screw threads 25. The torque adjustment screws 66 are inserted into the second and third plurality of through-going holes 56 62 into the second plurality of screw threads 25. By tightening the torque adjustment screws 66, the amount of friction between the first annular disc 36 and the hub component 12 is increases and thereby, the maximum amount of torque which may be transferred from the hub component 20 to the first annular disc 36 increases. Consequently, by loosening the torque adjustment screws 66, the force applied by the spring washer 50 decreases, thereby allowing less torque to be transferred from the hub component 12 to the first annular disc 36.

The whole assembly 10 is preferably made of steel. For the first and second friction discs 44 and 46, different kinds of steel may be used for achieving different frictions coefficients between the first annular disc 36 and the second annular disc 48, and, between the first annular disc 36 and the hub component 20. Preferably, a material having a high thermal conductivity is used for both the friction discs 44 and 46. The benefit of using dual juxtaposed friction surfaces is that in case one of the friction discs 44, 46 have been deteriorated by e.g. lubricants such as fats and/or oils used for lubricating the drive shaft (not shown), the other friction disc may still be able to operate normally. Thereby, a longer service life of the torque limiting assembly may be achieved.

During normal operation, the hub component 20, the second annular disc 48 and the first annular disc 36 are all rotating synchronously. This is the situation during normal operation when a suitable amount of torque is being transferred from the torque input part 12 to the torque output part 35. In case of a failure, such as a short circuit generator or a drive shaft being stuck, the torque will increase dramatically. A dramatic increase of torque will in most cases cause a breakdown and severe damage to the equipment, unless a torque limiting assembly is employed. To avoid damage, the first annular disc 36 will slip in relation to the hub component 20 and the second annular disc when a specified torque value has been overrun. The first annular disc 36 will then rotate in relation to the hub component 20 and the second annular disc 48 and thereby the equipment must not be to sustain the excessive torque which would otherwise be applied. It should be noted that the hub component 20 and the second annular disc 48 are fixed together by the torque adjustment screws 66 and therefore always rotate synchronous.

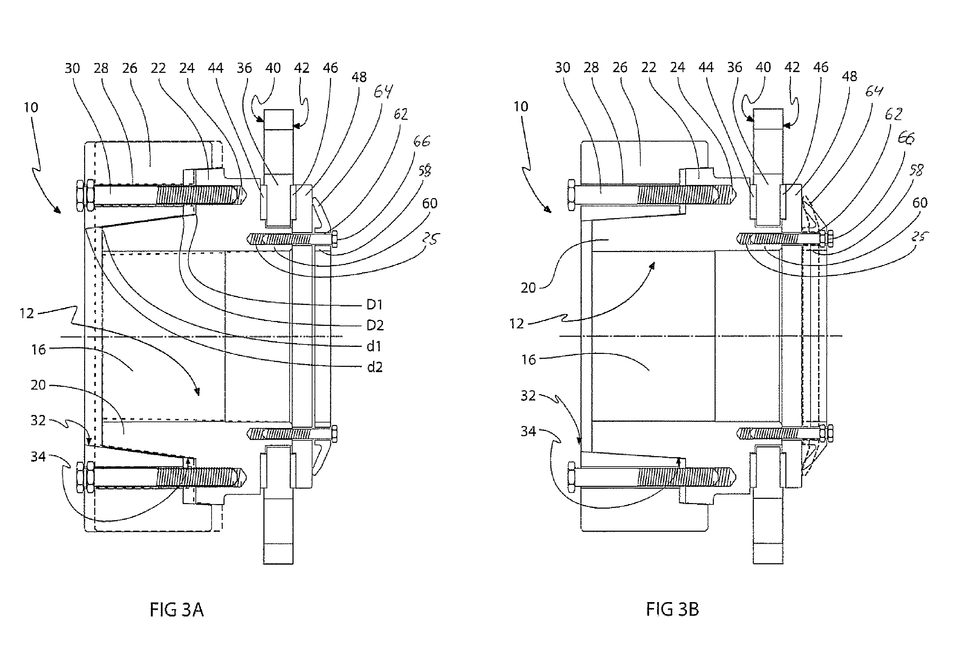

Fig. 3a shows a schematic view of the tightening of the torque shaft installation screws 30. It can be seen that the maximum diameter D1 of the inner conical surface 34 is slightly larger than the maximum diameter D2 of the outer conical surface 32, and that the minimum diameter d 1 of the inner conical surface 34 is slightly larger than the minimum diameter d2 of the outer conical surface 32" By tightening the torque shaft installation screws 30, the outer conical surface 32 will apply an inwardly directed force to the inner conical surface 34 of the hub component and constrict the through-going central bore 16 by bending the hub component 20 slightly inward. This will cause the hub component 20 to be securely fastened onto the outer surface of the torque supply shaft. The filled lines represent the non-tightened state whereas the dashed lines represent the tightened state, The inwardly bending of the hub component 20 preferably is in the sub mm range.

Fig. 3b shows a schematic view of the tightening of the torque adjustment screws 66 into the second plurality of screw threads 25. By tightening the torque adjustment screws 66, the fixation ring 60 of the spring washer 50 will be moved in a direction towards the third radial surface 52 of the second annular disc 48. The flexible flange 54 of the spring washer 50 will thereby apply an increasing spring force against the second annular disc 48, which will cause the first annular disc 36 to be clamped between the second annular disc 48 and the hub component 20. The friction force and thereby the transmittable torque between the torque input part 12 and the torque output part is determined by the friction coefficient of the material used for the friction discs 44 and 46 and by the force applied by the spring washer 50 onto the circular plate 48. The transmittable torque may therefore be adjusted any time by tightening or loosening the torque adjustment screws 66 and/or exchanging the first and/or second friction discs 44 46. The torque adjustment screws 56 are inserted in an opposite direction in relation to the torque shaft installation screws 30 and are always easily accessible for adjustment from the outside. The torque adjustment screws 56 are as well as the torque shaft installation screws 30 accessible at any time and will never be obscured by any other parts of the torque limiting assembly 10. The filled lines represent the non-tightened state whereas the dashed lines represent the tightened state.

Although the present invention has been described above with reference to a specific embodiment of the torque limiting assembly, it is of course contemplated that numerous modifications may be deduced by a person skilled in the art, and modification readily perceivable by a person having ordinary skill in the art in consequently to be construed part of the present invention as defined in the appending claims.

List of parts with reference to the figures:

10. Torque limiting assembly
12. Torque input part

14. Torque supplying shaft
16 Through-going central bore
18. First radial surface
20. Hub component
22. Outwardly extending flange
23 Annular flange
24. First plurality of screw threads
25. Second plurality of screw threads.
26. Locking ring
28. First multitude of through-going holes
30. Torque shaft installation screws
32 Outer conical surface
34 Inner conical surface
35 Torque output part
36. First annular disc
38. Mounting flange
40. First side
42. Second side
44. First friction disc
46. Second friction disc
47. First central aperture
48. Second annular disc
50. Second radial surface
52. Third radial surface
54. Second central aperture
56. Second plurality of through-going holes
58. Spring washer
60. Fixation ring
62. Third plurality of through-going holes
64. Spring member
68. Torque adjustment screws

## Claims

1. A torque limiting assembly comprising:

a torque input part for coaxial connection to a rotational motion torque supplying shaft and a torque output part for connection to a rotational motion torque receiving appliance and for coaxial mounting in relation to said torque input part, said torque output part being configured as a torque limiting first annular disc having opposite first and second sides including a first and a second specific torque defining friction surface, respectively, said torque limiting first annular disc defining a first central aperture having a diameter substantially larger than the diameter of said torque supplying shaft, said torque input part including four components being:

a hub component defining a through-going cylindrical bore defining a tight fit clearance with said torque supplying shaft, said hub component further defining a first radial surface including a third specific friction surface for contacting said first specific torque defining friction surface of said torque limiting first annular disc, said hub component further defining a reception surface opposite said first radial surface, said hub component further defining an outer conical surface tapering away from said first radial surface and defining a first maximum diameter juxtaposed said first radial surface and a first minimum diameter opposite said first radial surface, said hub component further having an annular flange located within said first central aperture when said third specific friction surface is contacting said first specific friction surface, said annular flange defining an exposed annular end face, said hub component further including a first plurality of screw threads extending from said reception surface into said hub component and being parallel to said through-going cylindrical bore, and a second plurality of screw threads extending from said annular end face into said annular flange and being parallel to said through going cylindrical bore, a conical locking ring defining an inner conical surface for cooperating with said outer conical surface of said hub component when said conical locking ring is mounted on said hub component, said inner conical surface defining a second minimum diameter larger than the diameter of said through-going cylindrical bore of said hub component and a second maximum diameter slightly smaller than said first maximum diameter and substantially larger than said first minimum diameter for providing a substantial contact surface between said inner conical surface and said outer conical surface when said conical locking ring is mounted on said hub component, said locking ring further comprising a first multitude of through-going holes being in registration or alignment with said first plurality of screw threads when said conical locking ring is mounted on said hub component,

a second annular disc defining a second central aperture having a diameter slightly larger than the diameter of said torque supplying shaft and having opposite second and third radial surfaces, said second radial surface including a fourth specific torque defining friction surface for contacting said second specific torque defining friction surface, said second annular disc further comprising a second multitude of through-going holes being in registration or alignment with said second plurality of screw threads when said second annular disc is mounted on said hub component, and

a combined annular spring washer and fixation ring defining a third central aperture having a diameter slightly larger than the diameter of said torque supplying shaft and defining an inner fixation ring and an outer spring member, said inner fixation ring comprising a third multitude of through-going holes being in registration or alignment with said second multitude of through-going holes and said second plurality of screw threads when said inner fixation ring is mounted on said hub component, said outer spring member protruding outwardly from said inner fixation ring, said outer spring member being in contact with and applying a clamping force onto said third radial surface of said second annular disc to achieve a first friction force between said first and third specific torque defining friction surfaces and a second friction force between said second and fourth specific torque defining friction surfaces, said torque limiting assembly further comprising:

a first set of screws mounted in said first multitude of through-going holes and fixated to said first plurality of screw threads, and

a second set of screws mounted in said second and third multitudes of through going holes and fixated to said second plurality of screw threads.

2. The torque limiting assembly according to claim 1, wherein said inner and outer conical surfaces define a tapering angle in relation to said cylindrical bore of between 0.1 degrees and 30 degrees, preferably between 3 degrees and 10 degrees and more preferably between 5 degrees and 7 degrees.

3. The torque limiting assembly according to any of the claims 1-2, wherein said torque limiting assembly is made of steel.

4. The torque limiting assembly according to any of the claims 1-3, wherein the friction coefficient between said first and third specific torque defining friction surfaces and between said second and fourth specific torque defining friction surfaces varies by 0%-100%, preferably by 10%-30%, more preferably by 20%-30%.

5. The torque limiting assembly according to any of the claims 1-4, wherein the distance between said first maximum diameter and said second maximum diameter comprises 1-20 mm, preferably 2-10 mm and more preferably 4-5 mm.

6. The torque limiting assembly according to any of the claims 1-5, wherein the distance between said first minimum diameter and said second minimum diameter comprises 1-20 mm, preferably 2-10 mm and more preferably 4-5 mm.

7. The torque limiting assembly according to any of the claims 1-6, wherein the distance between said first maximum diameter and said first minimum diameter comprises 10-200 mm, preferably 20-100 mm and more preferably 40-50 mm.

8. The torque limiting assembly according to any of the claims 1-7, wherein the distance between said second maximum diameter and said second minimum diameter comprises 10-200 mm, preferably 20-100 mm and more preferably 40-50 mm.

9. The torque limiting assembly according to any of the claims 1-8, wherein said torque output part further comprises a number of mounting flanges with mounting holes for connection to said rotational motion torque receiving appliance, said number being 2-20, preferably 2-10, more preferably 4.

10. The torque limiting assembly according to any of the claims 1-9, wherein said first set of screws amounts to 4-50 screws, preferably 10-30 screws, more preferably 18 screws.

11. The torque limiting assembly according to any of the claims 1-1a, wherein said second set of screws amounts to 4-50 screws, preferably 10-30 screws, more preferably 20 screws.

12. The torque limiting assembly according to any of the claims 1-11, further including a first friction plate located between said first and third specific torque defining friction surface.

13. The torque limiting assembly according to any of the claims 1-12, further including a second friction plate located between said second and fourth specific torque defining friction surface.

14. The torque limiting assembly according to any of the claims 1-13 being incorporated in a water power plant or a wind power plant.

15. A method of limiting and adjusting torque between a rotational motion torque supplying shaft and a rotational motion torque receiving appliance by providing a torque limiting assembly comprising:

a torque input part for coaxial connection to a rotational motion torque supplying shaft and a torque output part for connection to a rotational motion torque receiving appliance and for coaxial mounting in relation to said torque input part, said torque output part being configured as a torque limiting first annular disc having opposite first and second sides including a first and a second specific torque defining friction surface, respectively, said torque limiting first annular disc defining a first central aperture having a diameter substantially larger than the diameter of said torque supplying shaft,
said torque input part including four components being:

a hub component defining a through-going cylindrical bore defining a tight fit clearance with said torque supplying shaft, said hub component further defining a first radial surface including a third specific friction surface for contacting said first specific torque defining friction surface of said torque limiting first annular disc, said hub component further defining a reception surface opposite said first radial surface, said hub component further defining an outer conical surface tapering away from said first radial surface and defining a first maximum diameter juxtaposed said first radial surface and a first minimum diameter opposite said first radial surface, said hub component further having an annular flange located within said first central aperture when said third specific friction surface is contacting said first specific friction surface, said annular flange defining an exposed annular end face, said hub component further including a first plurality of screw threads extending from said reception surface into said hub component and being parallel to said through-going cylindrical bore, and a second plurality of screw threads extending from said annular end face into said annular flange and being parallel to said through going cylindrical bore,
a conical locking ring defining an inner conical surface for cooperating with said outer conical surface of said hub component when said conical locking ring is mounted on said hub component, said inner conical surface defining a second minimum diameter larger than the diameter of said through-going cylindrical bore of said hub component and a second maximum diameter slightly smaller than said first maximum diameter and substantially larger than said first minimum diameter for providing a substantial contact surface between said inner conical surface and said outer conical surface when said conical locking ring is mounted on said hub component, said locking ring further comprising a first multitude of through-going holes being in registration or alignment with said first plurality of screw threads when said conical locking ring is mounted on said hub component,
a second annular disc defining a second central aperture having a diameter slightly larger than the diameter of said torque supplying shaft and having opposite second and third radial surfaces, said second radial surface including a fourth specific torque defining friction surface for contacting said second specific torque defining friction surface, said second annular disc further comprising a second multitude of through-going holes being in registration or alignment with said second plurality of screw threads when said second annular disc is mounted on said hub component, and
a combined annular spring washer and fixation ring defining a third central aperture having a diameter slightly larger than the diameter of said torque supplying shaft and defining an inner fixation ring and an outer spring member, said inner fixation ring comprising a third multitude of through-going holes being in registration or alignment with said second multitude of through-going holes and said second plurality of screw threads when said inner fixation ring is mounted on said hub component, said outer spring member protruding outwardly from said inner fixation ring, said outer spring member being in contact with and applying a clamping force onto said third radial surface of said second annular disc to achieve a first friction force between said first and third specific torque defining friction surfaces and a second friction force between said second and fourth specific torque defining friction surfaces,
said torque limiting assembly further comprising:
a first set of screws mounted in said first multitude of through-going holes and fixated to said first plurality of screw threads, and
a second set of screws mounted in said second and third multitudes of through going holes and fixated to said second plurality of screw threads,
said method comprising the two main steps of:
performing the sub-steps of: accommodating said torque supplying shaft inside of said through-going cylindrical bore of said hub component, subsequently accommodating said inner conical surface of said conical locking ring juxtaposed said outer conical surface of said hub component and subsequently tightening said first set of screws, and

performing the sub-steps of: accommodating said first specific friction surface of said first annular disc juxtaposed said third specific friction surface of said hub component, subsequently accommodating said fourth specific torque defining friction surface of said second annular disc juxtaposed said second specific torque defining friction surface of said hub component, subsequently accommodating said outer spring member of said combined annular spring washer and fixation ring juxtaposed said third radial surface of said second annular disc and subsequently tightening and adjusting said second set of screws.

FIG 1

EP 2 314 893 A1

FIG 2

FIG 3B

FIG 3A

Europäisches
Patentamt

European
Patent Office

Office européen
des brevets

**EUROPEAN SEARCH REPORT**

Application Number

EP 09 17 3690

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 3 457 733 A (BANGERTER KENNETH R ET AL) 29 July 1969 (1969-07-29) * column 1, line 68 - column 2, line 8; figure 1 * * column 2, line 41 - line 46 * * column 2, line 66 - column 3, line 23 * ----- | 1,3-8, 12-15 | INV. F16D1/09 F16D7/02 F16D43/21 |
| A,D | DE 20 2005 000215 U1 (KUPPLUNGSTECHNIK GMBH [DE]) 24 May 2006 (2006-05-24) * figures 1,2 * ----- | 1,3-8, 12-15 | |
| A | JP 2000 179563 A (SAKAI MFG) 27 June 2000 (2000-06-27) * abstract; figures 8,9 * ----- | 1-3 | |
| A,D | WO 2008/049428 A1 (ZERO MAX AS [DK]; NILSSON STIG [DK]; JOERGENSEN TOMAS MELANCHTON [DK];) 2 May 2008 (2008-05-02) * the whole document * ----- | 1,14-15 | |
| | | | TECHNICAL FIELDS SEARCHED (IPC) F16D |

The present search report has been drawn up for all claims

| Place of search | Date of completion of the search | Examiner |
|---|---|---|
| The Hague | 10 March 2010 | Székely, Zsolt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 17 3690

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2010

| Patent document cited in search report | | Publication date | Patent family member(s) | | Publication date |
|---|---|---|---|---|---|
| US 3457733 | A | 29-07-1969 | FR | 1568555 A | 23-05-1969 |
| | | | GB | 1194475 A | 10-06-1970 |
| DE 202005000215 | U1 | 24-05-2006 | NONE | | |
| JP 2000179563 | A | 27-06-2000 | JP | 3834159 B2 | 18-10-2006 |
| WO 2008049428 | A1 | 02-05-2008 | CA | 2667443 A1 | 02-05-2008 |
| | | | CN | 101636595 A | 27-01-2010 |
| | | | EP | 1916430 A1 | 30-04-2008 |
| | | | EP | 2087246 A1 | 12-08-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008049428 A
- DE 202005000215 U1
- US 3319508 A
- US 4338798 A